# EUROPEAN PATENT SPECIFICATION

(11) **EP 1 819 531 B1**
(45) Date of publication and mention of the grant of the patent: **03.08.2016**
(21) Application number: 05803669.0
(22) Date of filing: 02.11.2005
(51) Int. Cl.: B60C 11/00, B60C 1/00, B60C 19/00, G09B 9/042, B60C 11/02, B60C 5/00

(54) **VEHICLE TYRE**
FAHRZEUGREIFEN
PNEU POUR VEHICULE

(30) Priority: 03.11.2004 FI 20045418
(43) Date of publication of application: 22.08.2007
(73) Proprietor: Skidtyre Oy, 24100 Salo (FI)
(72) Inventor: KARPPINEN, Teuvo, 98530 Pyhätunturi (FI)
(74) Representative: Kolster Oy Ab
(86) International application number: PCT/FI2005/050390
(87) International publication number: WO 2006/048510

(56) References cited:
- EP-A2- 0 834 851
- WO-A1-2006/018566
- BE-A7- 1 010 284
- CA-A1- 2 013 777
- FR-A1- 2 619 649
- FR-A1- 2 680 593
- JP-A- 06 122 301
- JP-A- 2000 142 508
- US-A- 6 024 381

## Description

### FIELD

The invention relates to a vehicle tyre and to a method of manufacturing a tyre.

### BACKGROUND

In the Finnish driving school system, the tuition includes compulsory winter driving training both in the first and in the second phase of driving school. Winter driving training is usually carried out on special driving tracks intended for training winter driving. During winter, the driving surface of the slippery driving training track consists of ice and condensed snow, enabling winter driving training, but at other times, the slippery driving surface has to be created artificially. The driving training track may be coated with plastic or sheet metal, which is spread with water or different oils to reduce friction.

A disadvantage of the winter driving training based on lubricating the driving surface artificially is the high construction and maintenance costs. Furthermore, the plastic or sheet metal surface lubricated with oils or water may even be unreasonably slippery considering how realistic such winter driving training is. It is also to be noted that oils cause environmental damage and that after winter driving training, the vehicle tyres may still have oil on them, which not only affects the driving properties but also increases the risk of accident on the asphalt.

US 4700798 describes a four-wheel structure which is attached to the vehicle frame and which weakens the contact with the driving surface by lifting the vehicle from the driving surface. A disadvantage of the structure described in the above-mentioned publication is that the vehicle has to be provided with counterparts for attaching the structure to the vehicle. A further disadvantage of the structure is its unrealistic driving properties as the weight of the vehicle does not totally rest on its four wheels but also partly on the structure attached to the frame.

US 4335899 describes a pedal car whose rear tyres comprise rollers that rotate transversely to the tyre rotation direction, the purpose of the rollers being to weaken the grip of the rear tyres in a curve. This publication describes a complicated solution for reducing the grip of a tyre. Furthermore, the tyres according to the solution are intended to reduce the tyre grip only in curves due to the rotation direction of the rollers. Neither does the publication discuss the driving properties of the rollers functioning as a contact surface against the tyre driving surface when a vehicle moves straight ahead. The publication in question does not mention, for example, the material of the rollers, i.e. contact surface, or any other issue affecting grip.

JP 10-81112 describes a vehicle tyre where the contact surface in contact with the driving surface is coated with a material that prevents mud from sticking to the tyre surface. Thus mud cannot block the tyre tread and reduce the grip. A tyre coated with such material improves the contact between the tyre and the driving surface and thus also the driving properties.

GB 2351691 also describes a solution where material preventing mud from sticking to the grooves in the tread of a tyre or a shoe is added to the surface of a tyre, shoe or the like (to the bottom of a shoe). In the solution described in this publication, only the grooves of the tyre or shoe tread are coated with such material. A tyre or a shoe coated with this kind of material thus improves the contact between the tyre or shoe and the driving surface and consequently also the grip properties.

WO 2006/018566 discloses a device for reproducing driving conditions on a slippery road for a vehicle provided with wheels comprising a removable belt thread fixable to one or several wheels of the vehicle whose adhesion power is less than that of the wheels of the vehicle. A method for assembling the inventive device on a wheel provided with a tyre. Said invention is used for mechanical sports and for training to drive in adhesion-loss conditions.

CA 2 013 777 discloses a removable friction reducing tread for bicycle tires. The tires of an all terrain bicycle (ATB) are converted from being wide, soft and covered with knobs as required for traction in dirt tires which are narrow, hard and smooth so as to greatly reduce the ATBs rolling friction over pavement. Installing this invention when appropriate allows the ATB to efficiently serve both for recreational purposes and commuting purposes. The invention takes the form of a removable hoop who's inside diameter is slightly smaller than the outside diameter of a standard ATB tire. It is attached to the ATB tire utilizing friction resulting from de-flating the ATB tire, forcing the tread hoop onto its center and then re-inflating the tire. The hoop itself is composed of two elements. The first is an inner band made of steel, carbon fiber or other material having high rigidity and tensile strength. This band provides tensile strength in the hoop, distributes the load from the hoop onto multiple knobs on the ATB tire and also keeps the hoop circular despite the widely spaced knobs supporting it. The second component of the rubber hoop is the rubber itself which forms the low friction tread and inside of which the tensile band is encased. The rubber component is roughly semicircular in cross section and has the tensile band cast within it near its slightly concave inner side. The convex outer surface of the rubber component has a shallow road racing tread pattern cast into it.

### BRIEF DESCRIPTION

The object of the present invention is to provide a driving training tyre designed for winter driving training to avoid the problems associated with prior art solutions.

This object is achieved by a vehicle tyre according to the invention, which comprises a frame structure and a contact surface and which is characterized in that the contact surface is a low-friction contact surface comprising grip-weakening material for enabling winter driving training.

An aspect of the invention relates to a method of producing a vehicle tyre, which is characterized by forming a low-friction contact surface on the tyre frame structure, the low-friction contact surface comprising friction-weakening material and enabling winter driving training.

The driving training tyre according to the invention provides several advantages. The low-friction driving training tyre enables winter driving training in a technically simple manner on a conventional driving track coated with asphalt or concrete or on another suitable conventional substructure. Thus winter driving can be also trained in closed-off areas other than driving training tracks provided with lubricating apparatuses. Such areas include parking lots and infrequently used airfields. Winter driving can also be trained with different tyre grip properties using different tyre series that comprise different grip-weakening material compositions. This corresponds to winter driving training on different road surfaces, such as on an icy, wet or snowy road surface. Furthermore, winter driving training is economical because the driving conditions on slippery roads can be provided simply by changing the vehicle tyres. The driving training tyres according to the invention require no special features of the vehicle but the driving training tyres can be installed in the vehicle in the same way as conventional tyres intended for conventional driving.

### LIST OF FIGURES

In the following, the structure of a tyre according to prior art and a driving training tyre and a method of manufacturing a tyre according to the invention will be described in greater detail with reference to the accompanying figures, in which
Figure 1 illustrates a cross section of a prior art vehicle tyre,
Figure 2 illustrates a cross section of a low-friction vehicle tyre whose contact surface comprises grip-weakening material, and
Figure 3 illustrates a cross section of a low-friction vehicle tyre whose contact surface comprises grip-weakening material and is treaded.

### DESCRIPTION OF EMBODIMENTS

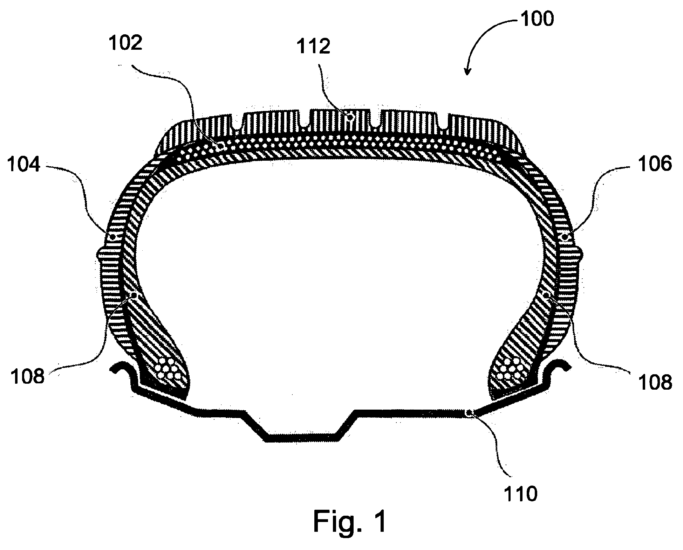

In the following, the general structure of a motor vehicle tyre will be described with reference to Figure 1. As a supporting structure, the tyre 100 comprises a frame 108, which provides the tyre with its elastic properties and shape. The frame 108 may be made of a nylon braid reinforced with steel, for example. The uppermost layer of the frame 108 may be a belt structure 102 that surrounds the tyre 100. The belt structure 102 may be made of nylon braid, for example. The belt structure is not, however, a necessary part of the tyre 100. Furthermore, the tyre 100 comprises side surfaces 104, 106 on both sides of the frame 108, which are usually made of a rubber composition and protect the tyre frame 108. The tyre 100 further comprises a contact surface 112, which affects the grip properties of the tyre 100. The contact surface 112 is the part of the tyre 100 that is in contact with the driving surface, and thus the material and tread of the contact surface 112 have an essential effect on the vehicle's driving properties. Usually the contact surface 112 is made of a rubber composition. The contact surface 112 of the tyre 100 may be cast of the same material together with the side surfaces 104, 106 of the tyre or they all may be made of different materials. The tyre is typically installed around a disc wheel 110. The disc wheel 110 is usually made of metal or a metal alloy.

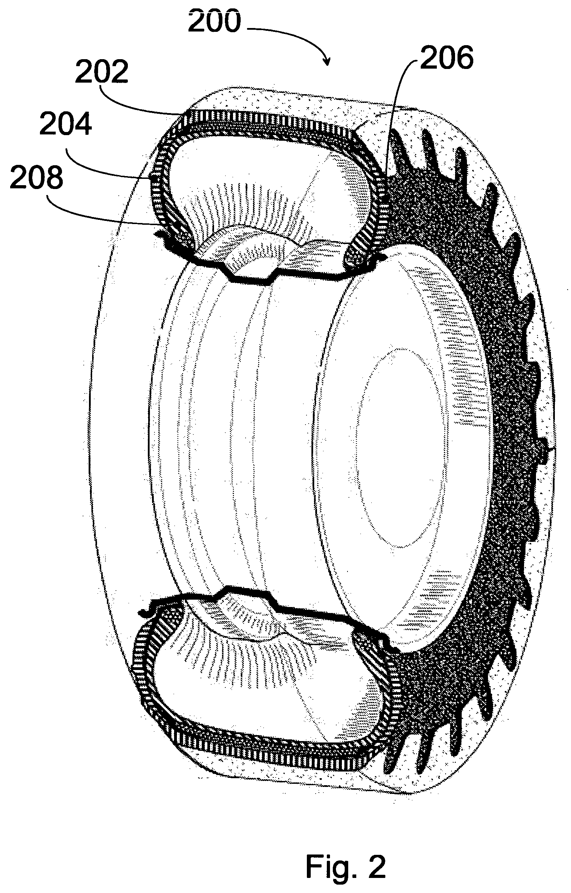

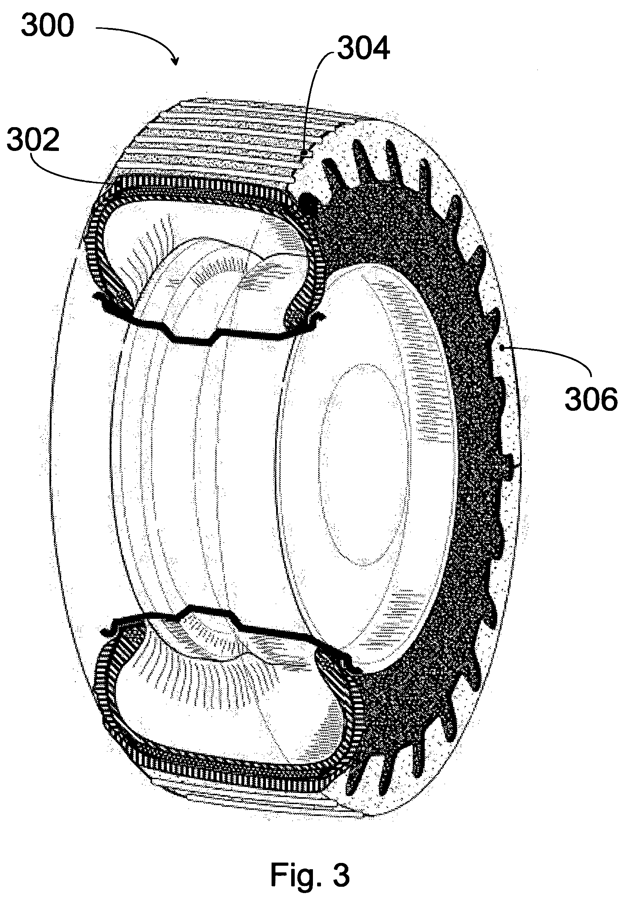

in the foiiowing, the structure of a low-friction driving training tyre will be described with reference to Figures 2 and 3.

The friction coefficient between the contact surface of the tyre and the driving surface is decreased for winter driving training on an asphalt surface, for example. In a preferred embodiment of such a low-friction tyre, the contact surface 202 consists of a grip-weakening material which forms a friction coefficient between the contact surface 202 and the driving surface that is at most 50 per cent of the friction coefficient of the rubber material of a high-friction vehicle tyre intended for road traffic use. The friction coefficient between the high-friction rubber material and the asphalt-coated driving surface is approximately 1, whereas the friction coefficient between the contact surface of a low-friction tyre and the asphalt-coated driving surface is below 0.5. The low-friction tyre can be used for simulating slippery driving conditions, such as driving properties in winter conditions, since in high-grip winter conditions, the friction coefficient may be approximately 0.35, whereas in very slippery winter conditions, the friction coefficient may be approximately 0.1.

The grip-weakening material of the low-friction tyre may be polyurethane, for instance. Other feasible grip-weakening materials include polyethylene, polyamide, polytetrafluoroethylene (teflon), various silanes, epoxes, and rubber-based elastomers not suitable for use on roads due to their low friction. The grip-weakening material may also be a composition including, in addition to at least one of the above-mentioned materials, other components affecting the grip properties. Even though only a few examples of grip-weakening materials were described above for providing a tyre with a lower friction, it is clear that the tyre contact surface may also comprise other grip-weakening materials. Low-friction tyres with different grip properties can be obtained by using different grip-weakening material compositions on the tyre contact surface. This enables simulation of different driving conditions, such as high-grip or very slippery winter conditions, slippery conditions caused by water on the driving surface or other factors.

As appears from Figure 2, the low-friction tyre comprises a frame structure 208, which may be similar to the frame structure of a prior art vehicle tyre. The contact surface 202 of the low-friction tyre 200 ("low-friction contact surface") comprises grip-weakening material. The contact surface 202 may be completely made of grip-weakening material. The contact surface 202 may also be made of a mixture of a high-friction rubber composition and grip-weakening material, where the mixing ratio of the rubber composition and the grip-weakening material determine the grip properties of the low-friction tyre 200. The grip-weakening material and the rubber composition may also be separate layers on the contact surface 202 of the low-friction tyre 200. The grip-weakening material may also be a coating which is formed around the low-friction tyre 100 parallel with the tyre circumference and extends around the tyre, being substantially as wide as the contact surface 202 of the low-friction tyre 200.

In a preferred embodiment of the low-friction tyre 200, the grip-weakening material also extends at least partly to either of the side surfaces 204, 206 of the tyre 200 or to both of them. The side surface or side surfaces 204, 206 may be completely made of grip-weakening material. The side surface or side surfaces 204, 206 may also be made of a mixture containing a high-friction rubber composition and grip-weakening material. The grip-weakening material and rubber composition may also be separate layers on the side surface or side surfaces 204, 206 of the tyre.

The contact surface 202 of the low-friction tyre 200 according to Figure 2 is smooth. To affect the grip properties of the tyre 200, the contact surface 202 may also be treaded. The contact surface may be treaded with longitudinal grooves to weaken the grip properties. The contact surface 302 of the low-friction tyre 300 according to Figure 3 comprises transverse grooves 304, which, depending on the density of transverse grooves, make the tyre vibrate during driving (a vibrating tyre). Thus the tyre 300 makes a clearly audible sound during driving. When the tyres lock in connection with braking, the sound changes, which facilitates the noticing of the locking of the tyres.

A low-friction tyre can be produced by tyre manufacturing methods known per se. In the production of a low-friction tyre, it is essential to form a low-friction contact surface comprising grip-weakening material so that it rests on the tyre frame structure. Either or both of the side surfaces of the low-friction tyre may be formed from grip-weakening material. A low-friction tyre may also be produced using an existing tyre which comprises at least a frame structure. A new contact surface containing grip-weakening material may be formed on an existing tyre contact surface. The original contact surface of an existing tyre may also be removed, in which case a new contact surface is formed. A low-friction tyre can also be produced by manufacturing a frame structure and forming a contact surface that rests on it and comprises grip-weakening material.

To facilitate the noticing of the low-friction property of a tyre, a preferred embodiment of the low-friction tyre 200, 300 comprises a deviation indication area. The purpose of this is to reduce the risk of inadvertently using the low-friction tyre in road traffic. The deviation indication area may be included in the grip-weakening material of the low-friction tyre 200, 300, for instance. The deviation indication area may comprise the tyre contact surface 202, either or both of the tyre side structures 204, 206, or several of the above-mentioned tyre components. The deviation indication area may also be a separate deviation indication means added to the tyre. Such a deviation indication means may be, for example, a sticker, stamp or paint highlighting.

The deviation indication area may be implemented by, for example, colouring 306 so that it can be clearly noticed whether a tyre is a low-friction one. The deviation indication area may also be implemented by tread. If the deviation indication area is implemented by tread and the contact surface 302 is part of the deviation indication area, the contact surface 302 may be treaded such that the tyre makes a clearly audible sound during driving. The tread may be, for example, similar to the transverse grooves 304 in the tyre 300 as shown in Figure 3. The tread may also be provided on the side surface 204, 206 of the tyre to indicate that the tyre is a low-friction one.

Even though the invention was described above with reference to the examples according to the appended drawings, it is clear that the invention is not restricted to them but it may be varies on several ways within the inventive concept disclosed in the enclosed claims.

## Claims

1. A vehicle tyre (200) comprising a frame structure (208), at least one side surface (204, 206), and a contact surface (202), wherein the contact surface (202) is a low-friction contact surface which comprises grip-weakening material and weakens the contact between the tyre and a driving surface so as to enable winter driving training,
**characterized in that** the grip-weakening material extends also into at least one of the side surfaces (204, 206) of the tyre.

2. A vehicle tyre (200) according to claim 1, **characterized in that** the friction coefficient of the contact surface (202) of the tyre (200) is at most 50 per cent of the friction coefficient of the rubber material of a tyre intended for road traffic use.

3. A vehicle tyre (200) according to claim 1, **characterized in that** the grip-weakening material is polyurethane.

4. A vehicle tyre (200) according to any one of preceding claims 1 to 3, **characterized in that** the tyre (200) comprises a deviation indication area for noticing that the tyre (200) is a low-friction one.

5. A vehicle tyre (200) according to claim 4, **characterized in that** the deviation indication area is implemented by tread or colouring.

6. A vehicle tyre (200) according to claim 1, **characterized in that** the grip-weakening material extends around the vehicle tyre (200) parallel with the vehicle tyre (200) circumference, being substantially as wide as the contact surface of the vehicle tyre (200).

7. A method of producing a vehicle tyre, the method comprising:
forming a low-friction contact surface on a tyre frame structure, the low-friction contact surface comprising friction-weakening material and weakening the contact directed by the tyre to a driving surface so as to enable winter driving training,
**characterized by** forming on the frame structure, in addition to the contact surface, at least one side surface comprising grip-weakening material.

## Patentansprüche

1. Ein Fahrzeugreifen (200) aufweisend eine Rahmenstruktur (208), mindestens eine Seitenfläche (204, 206), und eine Kontaktfläche (202), wobei die Kontaktfläche (202) eine Kontaktfläche mit geringer Reibung ist, die ein die Bodenhaftung schwächendes Material aufweist und den Kontakt zwischen dem Reifen und einer Fahroberfläche schwächt, um so Winterfahrtraining zu ermöglichen,
**dadurch gekennzeichnet, dass** das die Bodenhaftung schwächende Material sich ebenfalls in mindestens eine der Seitenflächen(204, 206) des Reifens erstreckt.

2. Ein Fahrzeugreifen (200) nach Anspruch 1, **dadurch gekennzeichnet, dass** der Reibungskoeffizient der Kontaktfläche (202) des Reifens (200) höchstens 50 Prozent von dem Reibungskoeffizienten des Gummimaterials eines für die Verwendung im Straßenverkehr bestimmten Reifens beträgt.

3. Ein Fahrzeugreifen (200) nach Anspruch 1, **dadurch gekennzeichnet, dass** das die Bodenhaftung schwächende Material Polyurethan ist.

4. Ein Fahrzeugreifen (200) nach einem der voranstehenden Ansprüche 1 bis 3, **dadurch gekennzeichnet, dass** der Reifen (200) einen Abweichungskennzeichnungsbereich aufweist, um zu bemerken, dass der Reifen (200) ein solcher mit geringer Reibung ist.

5. Ein Fahrzeugreifen (200) nach Anspruch 4, **dadurch gekennzeichnet, dass** der Abweichungskennzeichnungsbereich mit Draht oder Einfärbung verwirklicht ist.

6. Ein Fahrzeugreifen (200) nach Anspruch 1, **dadurch gekennzeichnet, dass** das die Bodenhaftung schwächende Material sich um den Fahrzeugreifen (200) parallel zu dem Umfang des Fahrzeugreifens (200) erstreckt und dabei im Wesentlichen so breit ist, wie die Kontaktfläche des Fahrzeugreifens (200).

7. Ein Verfahren zum Herstellen eines Fahrzeugreifens, welches Verfahren umfasst:
Bilden einer Kontaktfläche mit geringer Reibung auf einer Rahmenstruktur eines Reifens, welche Kontaktfläche mit geringer Reibung die Bodenhaftung schwächendes Material aufweist und den von dem Reifen auf eine Fahroberfläche gerichteten Kontakt schwächt, um so Winterfahrtraining zu ermöglichen,
**gekennzeichnet durch** Bilden mindestens einer Seitenfläche, welche die Bodenhaftung schwächendes Material aufweist, auf der Rahmenstruktur zusätzlich zu der Kontaktfläche.

## Revendications

1. Pneu de véhicule (200) comprenant une structure d'ossature (208), au moins une surface latérale (204, 206), et une surface de contact (202), dans lequel la surface de contact (202) est une surface de contact à faible frottement qui comprend un matériau réducteur de prise et réduit le contact entre le pneu et une surface de conduite de manière à permettre une formation à la conduite hivernale,
**caractérisé en ce que** le matériau réducteur de prise s'étend également dans au moins l'une des surfaces latérales (204, 206) du pneu.

2. Pneu de véhicule (200) selon la revendication 1, **caractérisé en ce que** le coefficient de frottement de la surface de contact (202) du pneu (200) est au maximum de 50 pour-cent du coefficient de frottement du matériau caoutchouteux d'un pneu destiné à une utilisation en trafic routier.

3. Pneu de véhicule (200) selon la revendication 1, **caractérisé en ce que** le matériau de réduction de prise est du polyuréthane.

4. Pneu de véhicule (200) selon l'une quelconque des revendications précédentes 1 à 3, **caractérisé en ce que** le pneu (200) comprend une zone indicatrice d'écart pour informer que le pneu (200) est un pneu de faible frottement.

5. Pneu de véhicule (200) selon la revendication 4, **caractérisé en ce que** la zone indicatrice d'écart est mise en oeuvre par le dessin de la bande de roulement ou une coloration.

6. Pneu de véhicule (200) selon la revendication 1, **caractérisé en ce que** le matériau réducteur de prise s'étend autour du pneu de véhicule (200) parallèlement à la circonférence du pneu de véhicule (200), étant sensiblement aussi large que la surface de contact du pneu de véhicule (200).

7. Procédé de production d'un pneu de véhicule, le procédé comprenant:
la formation d'une surface de contact de faible frottement sur une structure d'ossature de pneu, la surface de contact de faible frottement comprenant un matériau réducteur de frottement et réduisant le contact appliqué par le pneu sur une surface de conduite de façon à permettre une formation à la conduite hivernale,
**caractérisé par** la formation sur la structure d'ossature, en plus de la surface de contact, d'au moins une surface latérale comprenant du matériau réducteur de prise.
